# EUROPEAN PATENT SPECIFICATION

(11) **EP 2 366 479 B1**
(45) Date of publication and mention of the grant of the patent: **20.11.2013**
(21) Application number: 10425182.2
(22) Date of filing: 27.05.2010
(51) Int. Cl.: B23C 3/12, B23B 41/00, B23Q 3/00, B29C 37/04, B23Q 7/16, B23P 21/00, B23Q 7/04

(54) **A plant and a method for manufacturing frames of doors or windows**
Anlage und Verfahren zur Herstellung von Rahmen für Fenster oder Türen
Installation et procédé pour la fabrication de cadres pour portes ou pour fenêtres

(30) Priority: 16.03.2010 IT MO20100069
(43) Date of publication of application: 21.09.2011
(73) Proprietor: Emmegi S.P.A., 41010 Soliera (MO) (IT)
(72) Inventor: Arrondini, Cesare, 61122 Pesaro (Pesaro Urbino) (IT); Masetti, Goffredo, 61122 Pesaro (Pesaro Urbino) (IT)
(74) Representative: Colò, Chiara

(56) References cited:
- EP-A1- 1 095 729
- EP-A1- 1 854 581
- EP-A1- 2 202 028
- DE-A1- 2 407 876
- DE-A1- 3 920 462
- DE-A1- 3 920 465
- DE-A1-102008 009 995
- DE-U1- 9 316 593
- US-A- 5 370 835
- US-A- 6 006 408

## Description

The invention relates to a plant and a method for manufacturing frames of doors or windows, said frames being particularly made of a polymer material, for example polyvinyl chloride (PVC).

PVC frames are generally provided with holes, slots or milling cuts which serve to fix handles, hinges or other necessary components to the frame in order for the frame to be usable for obtaining a door or window. The holes, slots or more in general the milling cuts are traditionally made on single PVC section bars, which are then cut to a desired length and thereafter assembled to obtain the frame.

The frames obtained as described above have the drawback of poor precision, as errors can occur when the section bars are cut and/or welded to one another. Errors of this type, combined with further imprecisions which can occur during mechanical operations of drilling or milling, frequently lead to a frame in which the holes or slots are in a position which does not correspond to the desired position. Alternatively, it is known to manufacture the frames of doors or windows in a production line which assembles section bars that have previously been cut to the desired length. Thereafter, the operations required for mounting the desired components, for example handles or hinges, are manually performed on the frames exiting from the production line. This second process is more precise than the process in which the single section bars are first machined and then cut and assembled. However, working manually on the frames and manually applying the desired components require long production times, which drastically reduces productivity.

EP 1095729 discloses an example of a plant according to the preamble of claim 1. It also discloses a method for manufacturing a frame according to the preamble of claim 11.

DE 3920465 discloses a plant for producing frames, comprising a welding machine, a corner cleaning machine, a machine for making holes and a machine for gasket insertion.

EP 2202028 discloses an apparatus for moving a work-piece, such as a window frame, from a welding station to a cleaning station. The apparatus comprises a clamp susceptible of rotation for orienting the work-piece, at least one vertically movable drill unit being placed on a jaw of the clamp. EP 2202028 has a filing date earlier than the priority date of the present application, but was published after the filing date of the present application.

An object of the invention is to improve the plants and methods for manufacturing frames of doors or windows, in particular made of polymer material, for example polyvinyl chloride (PVC).

A further object is to provide a plant and a method whichenable increasing the precision of the work operations performed on door or window frames.

A further object is to provide a plant and a method which enable reducing the production times required for obtaining door or window frames.

A further object is to provide a plant for manufacturing door or window frames which has relatively reduced overall dimensions.

In a first aspect of the invention, there is provided a plant according to claim 1.

The plant according to the first aspect of the invention enables both the first and the second section bars of the frame to be machined while said section bars are arranged along the advancement direction. The first and the second working stations can thus comprise working units which do not have to move transversely to the advancement direction while machining the respective section bars. On the contrary, the working units present in the first and the second working stations can always be kept on the same side of the frame with respect to the advancement direction. This prevents the working units present in the first and the second working stations from obstructing movement of the frame along the advancement direction.

Further, as in both the first working station and the second working station the frame is machined after being assembled, it is possible to eliminate the errors which occur in the known methods due to an imprecise assembly of the already-worked section bars. This means that the precision of the finished frame can be increased.

The rotating device can rotate the frame about a substantially vertical rotation axis.

The rotating device is located in an intermediate station interposed between the first working station and the second working station.

This enables maximising the productivity of the plant because while a frame is rotated in the intermediate station, another frame can be machined in the first working station and a further frame can be machined in the second working station. In a further embodiment, the intermediate station comprises an operating unit for machining the frame, the rotating device being programmed to bring different zones of the frame to interact with the operating unit.

In this case, the same device, i.e. the rotating device of the intermediate station, is used for several different purposes. The rotating device of the intermediate station serves both to rotate the frame such as to bring all the zones of the frame which have to be machined by the operating unit to interact with said operating unit, and to orientate the second section bar parallel to the advancement direction at the outlet of the intermediate station. Thus there is no requirement for a device exclusively dedicated to orientating the second section bar in the advancement direction, which simplifies the structure of the plant and reduces the size thereof.

In an embodiment, the plant comprises a welding station provided upstream of the first working station for welding a plurality of section bars to one another such as to obtain the frame, the section bars being made of a polymer material. By integrating also the welding station into the plant, the production of frames can be made even simpler and more automated with respect to a case in which the plant according to the first aspect of the invention is supplied with frames that have already been formed.

In an embodiment, the intermediate station is a cleaning station for cleaning corner zones of the frame at which two adjacent section bars are welded to one another.

The cleaning station can comprise a cutting device for removing projecting portions of a welding bead.

The cleaning station is particularly important for frames which are made of polymer material, in particular PVC, as frames of this type can be obtained by nearing end zones of several section bars and welding the adjacent section bars, two by two, at the neared end zones. The neared end zones of two adjacent section bars, after having been welded to one another, form a corner zone of the frame.

The welded corner zone exhibits a welding bead which the cleaning station can remove. Thus, the aesthetic appearance of the door or window frames can be improved.

In an embodiment, the rotating device is programmed to perform three 90° rotations in sequence such that four corner zones of the frame are brought to interact in sequence with the operating unit of the intermediate station.

This embodiment is particularly suitable for quadrangular frames, i.e. frames formed by four section bars arranged such that there is an angle of 90° between two adjacent section bars.

In this case, the frame is positioned such that a first corner interacts with the operating unit. Thereafter, the rotating device rotates the frame by 90° in order to bring a second corner to interact with the operating unit. By means of a further rotation of 90°, a third corner of the frame is brought to the operating unit. Then, by further rotating the frame by 90°, a fourth and last corner can be machined by the operating unit. The intermediate station can thus process all the corners of the frame.

Owing to the three 90° rotations performed by the rotating device, the frame exits from the intermediate station after having been rotated by 270° with respect to the initial position.

This implies that the second section bar, initially perpendicular to the advancement direction, is arranged parallel to the advancement direction at the outlet of the intermediate station.

In an embodiment, the rotating device comprises a gripper device arranged for gripping the frame at a corner gripping zone.

The gripper device enables the frame to be firmly restrained during rotation. By gripping the frame in a corner gripping zone, it is possible to ensure that the frame is centred precisely in two directions with respect to the gripper device.

In an embodiment, the gripper device comprises a corner element having a first abutting surface and a second abutting surface which are perpendicular to one another, the gripper device further comprising a blocking element for blocking the corner gripping zone against the corner element.

The blocking element can be movable along a trajectory inclined by 45° with respect to the first and the second abutting surfaces.

In an embodiment, the blocking element is suitable for being positioned internally of the frame, while the corner element is suitable for being positioned on the outside of the frame. The corner element and the blocking element interact with one another to guarantee that the frame is firmly gripped during rotation in a position that is precisely predetermined. However, the rotating device can also comprise a handling device which is different from the above-described gripper device, in order to handle the frame during rotation.

In an embodiment, the plant comprises a translation device which can be driven in a coordinated way with the rotating device in order to displace the frame with a roto-translation movement which positions the second section bar along the advancement direction.

The roto-translation movement can in particular bring the desired zones of the frame to interact with the operating unit.

By coordinating the rotating device and the translation device, a high number of trajectories is made available, which enables processing many types of frames, having different shapes and sizes and possibly causing them to interact with the operating unit of the intermediate station. In an embodiment, the first working station and/or the second working station comprise a working unit that is movable along a section bar of the frame for machining the section bar, said section bar being parallel to the advancement direction. Thus, the working unit of the first and/or the second working station is able to interact with distinct portions of the section bar which is parallel to the advancement direction, such as to perform the required work operations in the desired position.

In an embodiment, the first working station and/or the second working station comprise gripping means suitable for engaging with a section bar of the frame which is arranged transversely to the advancement direction, in order to keep the frame stationary while the frame is being machined.

The gripping means keep the frame stationary while the frame is being machined, in order to guarantee a high degree of work precision.

In an embodiment, the first working station and/or the second working station comprise a support device for supporting a portion of the section bar to be machined, a transverse blocking device for blocking said portion transversely to the advancement direction while said portion is being machined, the support device and the transverse blocking device being movable with the working unit in order to engage with different portions of the section bar to be machined. However it is also possible to use working stations having a different structure from the above one. For example, the working unit could be arranged in a stationary position along the advancement direction, while the frame moves in order to enable the work operations to be performed in the required position.

In an embodiment, the first working station comprises two working units distanced from one another in a direction which is transverse to the advancement direction, such as to machine simultaneously two parallel section bars of the frame.

The second working station can also comprise two working units distanced from one another transversely to the advancement direction, such as to machine simultaneously two parallel section bars of the frame.

In this way plant productivity can be increased, particularly in the case of quadrangular frames, as the first working station can machine simultaneously a pair of parallel section bars of the frame, after which the second working station machines simultaneously the other pair of section bars of the frame.

All the section bars making up the frame can thus be machined, which enables manual operations to be reduced to a minimum or even eliminated. The production time for the installation frames can thus be considerable reduced, for example to below 2 minutes for each frame.

In an embodiment, the first working station and/or the second working station are predisposed for carrying out on the frame work operations that are selected from a group comprising: drilling, milling, fastening an additional component to the frame.

The additional component can be, for example, a handle, a part of a hinge or a further accessory of a door or window. Thus, the frame which exits the plant is substantially finished and ready to be installed.

In a second aspect of the invention, there is provided a method for manufacturing a frame of a door or window, the frame being formed by a plurality of section bars, the method comprising the steps set out in claim 12.

The method according to the second aspect of the invention allows non-parallel section bars of the frame to be machined. Owing to the rotation step, both in the first working station and in the second working stations the section bars are machined while they are arranged along the advancement direction, which prevents the flow of the frames along the advancement direction from being hindered.

If the section bars were machined while being arranged transversely to the advancement direction, it would be necessary to provide working units which were movable transversely to the advancement direction, which might obstruct the advancement of the frames.

The step of rotating is performed in an intermediate station with the aim of causing different zones of the frame to interact with an operating unit provided in the intermediate station.

In order to position the frame with the desired orientation in the second working station, the same rotation is exploited which is used in the intermediate station to bring different zones of the frame to interact with the operating unit.

In an embodiment, the zones of the frame which are brought to interact with the operating unit of the intermediate station are corner zones in which two section bars of the frame are joined to one another.

In an embodiment, the frame is formed by four section bars, respective angles of 90° being defined between two adjacent section bars.

During the rotation step, the frame can be rotated about a rotation axis, for example vertical, with three consecutive 90° rotations.

In this way, all four corner zones of the frame interact in sequence with the operating unit of the intermediate station. Furthermore, the frame exits from the intermediate station rotated by 270° with respect to the entry position. This enables positioning the second section bar parallel to the advancement direction.

In an embodiment, the operating unit provided in the intermediate station removes excess material, for example by cutting, from corner zones of the frame in which two adjacent section bars are welded to one another.

This embodiment enables the rotations of the frame, which are required in order that all the corner zones may be cleaned in the intermediate station, to be exploited for correctly positioning the frame at the entry to the second working station.

The invention can be better understood and actuated with reference to the accompanying figures of the drawings, which illustrate some non-limiting embodiments thereof, in which:
Figure 1 is a schematic plan view, showing a plant for manufacturing frames for doors or windows;
Figure 2 is a perspective view of a cleaning station included in the apparatus of Figure 1;
Figure 3 is a perspective view from below of a gripper device of the cleaning station of Figure 2;
Figures 4 to 9 are schematic plan views showing a frame processed in a cleaning station, in subsequent moments of the work operations;
Figure 10 is a schematic plan view of a frame in a first working station of the plant of Figure 1;
Figure 11 is a schematic plan view like the one in Figure 1, showing a plant according to an alternative embodiment.

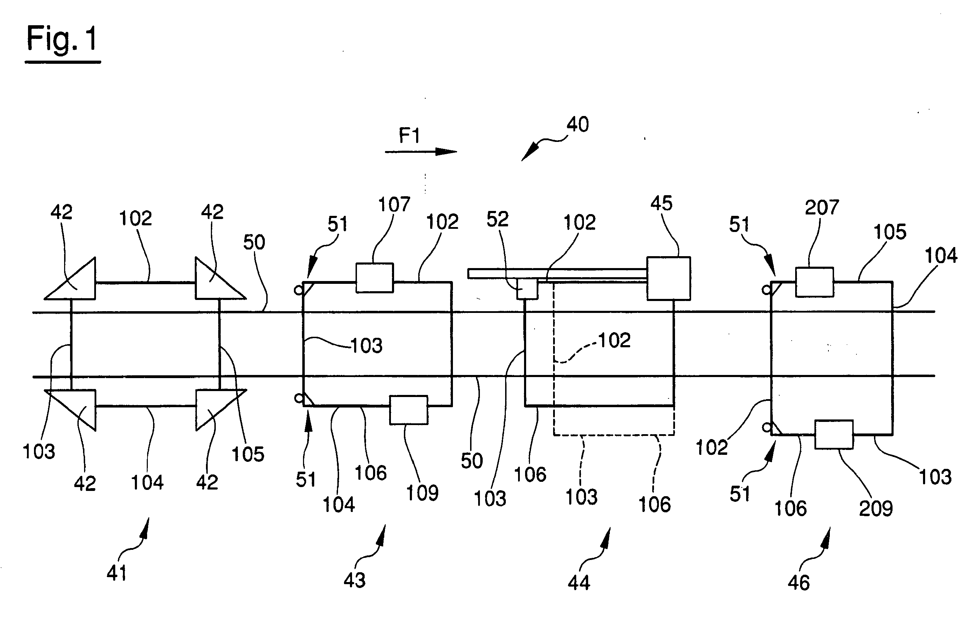

Figure 1 shows a plant 40 for manufacturing frames of doors or windows, the frames being made of a polymer material, in particular PVC.

The frames that are manufactured by the plant 40 comprise a plurality of section bars which can be joined to one another by welding. In the illustrated example, the frames manufactured by the plant 40 have a quadrangular shape and comprise a first section bar 102, a second section bar 103, a third section bar 104 and a fourth section bar 105. The first section bar 102 and the third section bar 104 are parallel to one another. The second section bar 103 and the fourth section bar 105 are also parallel to one another and are arranged transversely with respect to the first section bar 102 and the third section bar 104.

In particular, the frames manufactured by the plant 40 can be rectangular or square, in which case an angle of about 90° is defined between two consecutive section bars of the frame. Theoretically, the plant 40 can in any case also manufacture frames having a different shape from the shape described above or formed by a number of section bars which is other than four.

The plant 40 comprises a welding station 41 in which the first section bar 102, the second section bar 103, the third section bar 104 and the fourth section bar 105 are welded to one another at respective end zones in order to obtain a frame 106 having a quadrangular shape, for example rectangular or square.

The welding station 41 comprises for welding heads 42, each of which is arranged such as to weld two adjacent section bars in a corner zone of the frame 106. A welding station of this type is known for example from European patent application EP 1837163 and will not be described in detail herein below.

It is however possible also to use welding stations having a different structure from the one disclosed in EP 1837163, for example having a single welding head which interacts consecutively with all the corner zones of the frame 106.

The welding head or each welding head comprises a heating device for heating the end zones of two section bars which are to be welded to one another. In a case in which the two section bars have to be joined such as to form a 90° angle, the respective end zones have been previously cut along a cutting section forming an angle of 45° with a main axis of the section bar.

The welding head or each welding head further comprises pressing means for pressing against each other the previously heated end zones of two section bars to be welded. In this way the end zones, softened by effect of the heat transferred by the heating device, join to one another and form a welded joint. A welding bead is also formed at the welding joint, which bead projects externally of the surface of the section bars.

The plant 40 comprises advancement means for indexing the frame 106 in an advancement direction F1. The advancement means enable the frame 106 to be advanced through a plurality of working stations arranged downstream of the welding station 41. The advancement means can for example comprise a plurality of conveyor belts 50.

A first working station 43 is positioned downstream of the welding station 41. The structure of the first working station 43 will be more fully described herein below. The first working station 43 comprises a working unit 107 arranged for operating on the first section bar 102, i.e. on a section bar positioned parallel to the advancement direction F1. For this purpose, the working unit 107 is movable parallel to the advancement direction F1, along the first section bar 102, such as to interact with distinct portions of the first section bar 102.

The first working station 43 can further comprise a further working unit 109, positioned at a desired distance from the working unit 107, said distance being measured along a direction which is perpendicular to the advancement direction F1. The further working unit 109 enables a further section bar to be operated on, the further section bar being arranged parallel to the advancement direction F1 and being for example the third section bar 104. For this purpose, the further working unit 109 is movable parallel to the advancement direction F1.

Hence, the first working station 43 enables a pair of parallel section bars forming the frame 106 to be machined simultaneously.

The first working station 43 can further comprise gripping means 51 arranged for engaging with a section bar positioned transversely to the advancement direction F1, for example with the second section bar 103, such as to keep the frame 106 stationary during the operations that are performed in the first working station 43.

The gripping means 51 can in particular be configured such as to block the second section bar 103. Alternatively, the gripping means 51 could engage with the fourth section bar 105.

In an embodiment which is not illustrated, the first working station 43 could comprise only the working unit 107, while the further working unit 109 might be absent.

The working unit 107 and the further working unit 109, if present, are arranged for performing mechanical operations of drilling and/or milling on the section bars they interact with. Alternatively, the working unit 107 and the further working unit 109, if present, can be configured such as to apply additional components on the frame 106, for example handles, parts of hinges or other accessory elements which serve such that the frame 106 can be used as a part of a door or window.

The plant 40 further comprises, downstream of the first working station 43, a cleaning station 44 arranged for cleaning the welding beads which have been formed in the welding station 41 when the section bars forming the frame 106 have been welded to one another. The cleaning station 44 comprises a cleaning head 45 for cleaning the welding bead and a rotating device 52. The rotating device 52 rotates the frame 106 by predetermined angles such as to bring all the corner zones of the frame 106 consecutively to interact with the cleaning head 45. In particular, the cleaning head 45 cleans a first corner zone of the frame 106, after which the rotating device causes the frame 106 to perform three consecutive 90° rotations such that the other three corner zones of the frame 106 interact in succession with the cleaning head 45.

When the frame 106 arrives in the cleaning station 44, the first section bar 102 and the third section bar 104 are arranged parallel to the advancement direction F1, while the second section bar 103 and the fourth section bar 105 are arranged transversely, in particular perpendicularly, to the advancement direction F1. Since the rotating device located in the cleaning station 44 rotates the frame 106 by 90° three times, when the frame 106 exits from the cleaning station 44, the second section bar 103 and the fourth section bar 105 are parallel to the advancement direction F1, while the first section bar 102 and the third section bar 104 are perpendicular to the advancement direction F1. On exiting the cleaning station 44, the frame 106 is in the position indicated by the broken line in Figure 1.

A second working station 46 is arranged downstream of the cleaning station 44, the second working station 46 being suitable for performing mechanical operations of drilling and/or milling and/or applying accessory components on the frame 106. The second working station 46 has a structure which is entirely similar to the first working station 43. The second working station 46 comprises a working unit 207 and a further working unit 209 arranged for machining two section bars of the frame 106 that are parallel to the advancement direction F1. Due to the rotations that the frame 106 has been subjected to in the cleaning station 44, in the embodiment shown in Figure 1 the working unit 207 and the further working unit 209 interact respectively with the fourth section bar 105 and the second section bar 103. In this way it is possible to machine all the section bars making up the frame 106.

In a simplified embodiment, the second working station 46 might comprise a single working unit.

The frame 106 can now be unloaded from the plant 40 to be sent to a storage and dispatch zone.

The plant 40 enables the frames 106 to be obtained simply and automatically. In particular, the rotations of the frames 106 which are performed in the cleaning station 44 enable the frames 106 to be positioned such that all the section bars which make them up can be machined without using dedicated rotating devices.

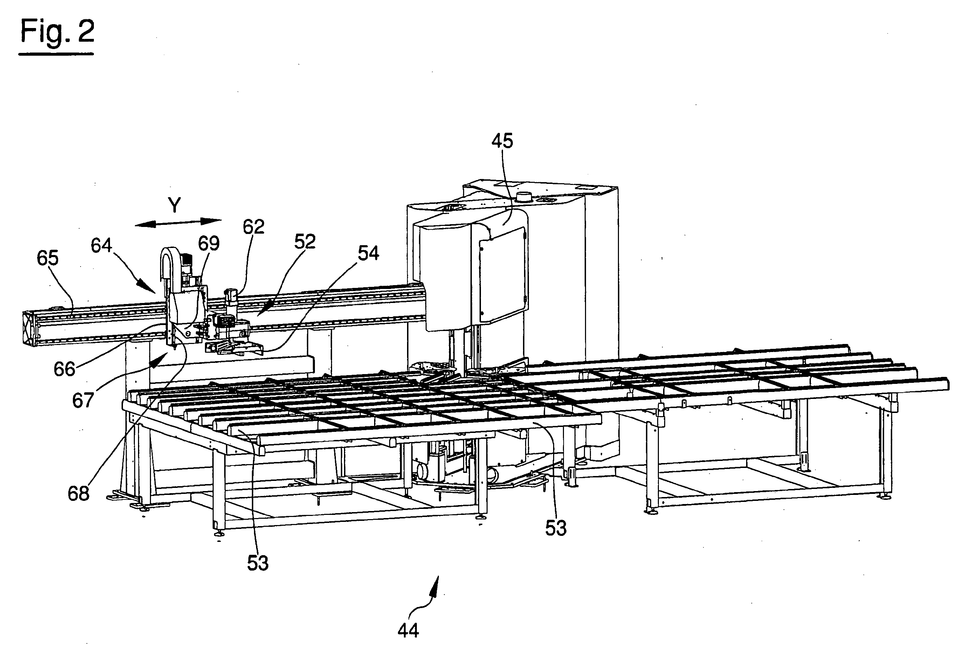

A particular embodiment of the cleaning station 44 is illustrated in Figure 2.

The cleaning station 44 comprises support means for supporting the frame 106 during work operations. The support means can comprise a plurality of support bars 53. The support means define a rest plane arranged at a predefined height for supporting the frame 106.

The cleaning head 45 is arranged in a stationary position in the cleaning station 44. The cleaning head 45 comprises a cutting device for removing projecting portions of the welding bead which has been formed in the corner joining zone between two adjacent section bars. The cutting device can comprise a cleaning blade, for example a circular blade, for cleaning an external edge of the corner joining zone. The cutting device can also comprise an upper cutting tool for removing the excess material of an upper welding bead formed on an upper surface of the corner joining zone.

A lower cutting tool can enable removal of the excess material, forming a lower welding bead on a lower surface of the corner joining zone.

Finally, the cleaning head 45 can comprise internal cutting means for cleaning an internal edge of the corner joining zone.

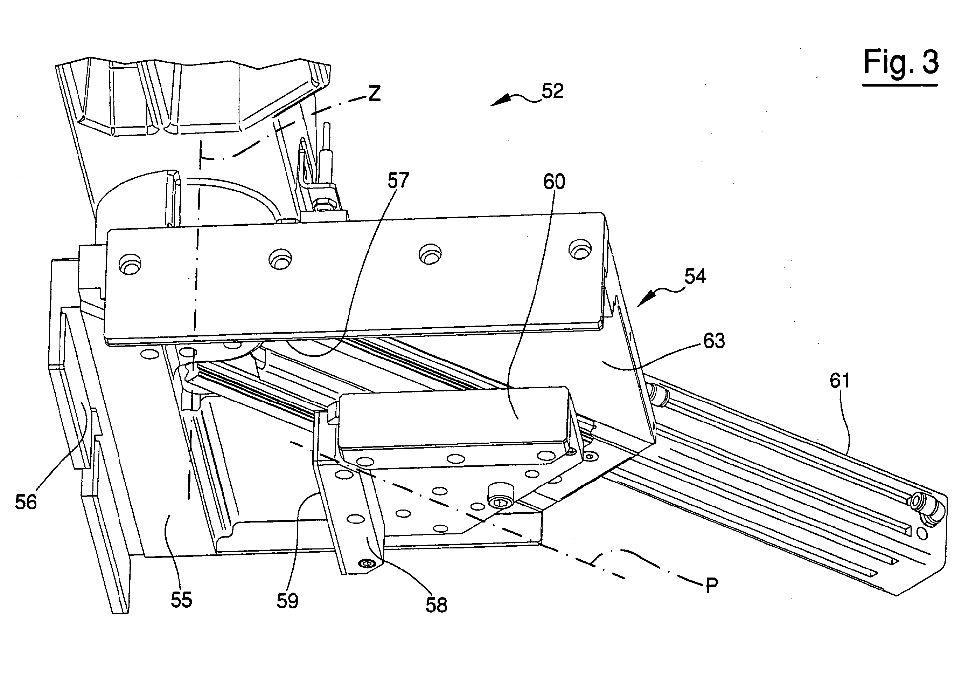

The rotating device 52 of the cleaning station 44 comprises a gripper device 54 arranged to grip the frame 106 in a corner gripping zone. The gripper device 54 is illustrated in detail in Figure 3, which relates to a position in which the gripper device 54 is rotated with respect to the position shown in Figure 2.

The gripper device 54 comprises a corner element 55 suitable for being positioned externally of the corner gripping zone. The corner element 55 is provided with a first abutting surface 56 and a second abutting surface 57, which are positioned such that an angle is defined between them which corresponds to the angle formed between the two section bars of the frame 106 in the corner gripping zone. In the illustrated example, the first abutting surface 56 is perpendicular to the second abutting surface 57.

The gripper device 54 further comprises a blocking element 58 for blocking the corner gripping zone of the frame 106 against the corner element 55. The blocking element 58 is suitable for being positioned internally of the frame 106. The blocking element 58 is provided with a blocking surface 69 and a further blocking surface 60, suitable for abutting against corresponding internal surfaces of the two section bars of the frame 106 which are joined to one another in the corner gripping zone. The blocking surface 59 and the further blocking surface 60 are perpendicular to one another, in the illustrated example.

The gripper device 54 further comprises an actuator element 61, for example of a pneumatic type, connected to the blocking element 58 for moving the blocking element 58 towards, or away from, the corner element 55. In particular, the actuator element 61 can move the blocking element 58 along a straight trajectory P which is inclined by 45° with respect to the first abutting surface 56 and the second abutting surface 57.

The rotating device 52 further comprises a motor device 62, shown in Figure 2, arranged for rotating the gripper device 54 about a rotation axis Z, shown in Figure 3. In the illustrated example, the rotation axis Z is substantially vertical. The motor device 62 can comprise an electric motor. The motor device 62 can act on a support portion 63 of the corner element 55, illustrated in Figure 3, the blocking element 58 being slidably connected to the support portion 63. In this way, the motor device 62 enables the corner element 55 and the blocking element 58 to be rotated simultaneously. The support portion 63 can shaped as a plate. The cleaning station 44 can further comprise a translation device 64, shown in Figure 2, for moving the frame 106 along a translation direction Y which is parallel to the advancement direction F1. The translation device 64 is drivable in a coordinated manner with the rotating device 52 in order to move the frame 106 with a roto-translation movement which brings the desired zones of the frame to interact with the cleaning head 45.

The translation device 64 comprises a linear guide 65 that extends along the translation direction Y, and a slide 66 which is movable along the linear guide 65. For this purpose, a motor is associated to the slide 66, for example an electric motor, which enables the slide 66 to be driven along the linear guide 65.

The slide 66 supports the rotating device 52, as will be more better described herein below.

A movement system 67 is associated to the gripper device 54 for lowering and raising the gripper device 54, such that the gripper device 54 engages and alternatively disengages from the frame 106. The movement system 67 comprises guide means 68, mounted on the slide 66, which extend along a vertical direction. The movement system 67 further comprises a carriage 69 and motor means for linearly driving the carriage 69 along the guide means 68. The motor means can comprise an electric motor.

The carriage 69 supports the corner element 55 and the blocking element 58 of the gripper device 54. In this way, when the movement system 67 moves the carriage 69 upwards and downwards, the gripper device 54 is also consequently displaced.

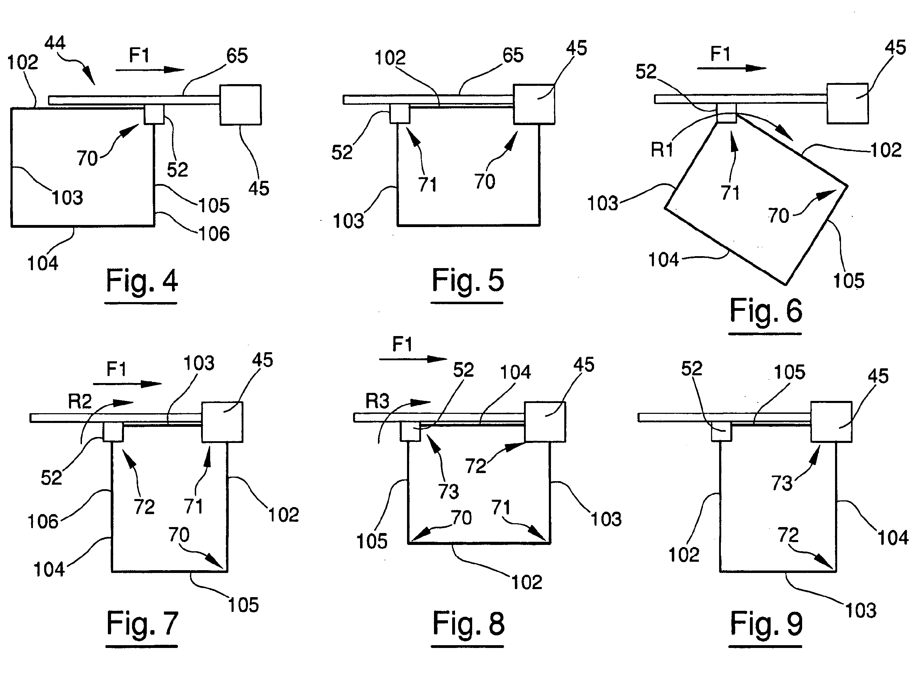

During functioning, when a frame 106 arrives at the entry of the cleaning station 44, the rotating device 52 is moved backwards along the linear guide 65 until it is positioned above a first corner zone 70 arranged in a front region of the frame 106. In the example illustrated in Figure 4, the frame 106 arrives at the entry of the cleaning station 44 with such an orientation that the first section bar 102 and the third section bar 104 are parallel to the advancement direction F1. The second section bar 103 and the fourth section bar 105 are arranged transversely, in particular perpendicularly, to the advancement direction F1. The first corner zone 70 is defined between the first section bar 102 and the fourth section bar 105.

When the gripper device 54 is positioned above the first corner zone 70, the movement system 67 lowers the gripper device 54 such that the corner element 55 is positioned externally of the first corner zone 70 and the blocking element 58 is positioned internally of the first corner zone 70. The actuator element 61 can now move the blocking element 58 towards the corner element 55 along the trajectory P, such that the first corner zone 70 of the frame 106 is blocked between the corner element 55 and the blocking element 58. At this point, the gripper device 54 has firmly gripped the frame 106.

The translation device 64 can now move the rotating device 52 forwards along the advancement direction F1, the gripper device 54 being connected to the rotating device 52. The first corner zone 70 gripped by the gripper device 54 is thus moved towards the cleaning head 45, as shown in Figure 4. When the first corner zone 70 has reached the cleaning head 45, the blocking element 58 is moved away from the corner element 55, such that the gripper device 54 releases the frame 106. The gripper device 54 is then moved upwards by the movement system 67 in order to disengage from the first corner zone 70. At this point, the cleaning head 45 can clean the first corner zone 70, by removing the welding beads and the flashes that were formed during the welding operation.

At the same time, the gripper device 54, together with the rotating device 52, is moved backwards with respect to the advancement direction F1 by means of the translation device 64. The gripper device 54 is thus positioned above a second corner zone 71, arranged in a rear region of the frame 106, as illustrated in Figure 5. The second corner zone 71 can for example be defined between the first section bar 102 and the second section bar 103. The rotating device 52 rotates the gripper device 54 by 90°, in an anticlockwise direction in the example of Figures 4 and 5, such that the gripper device 54 can grip the second corner zone 71.

When the cleaning head 45 has completely cleaned the first corner zone 70, the gripper device 54, which in the meantime has gripped the frame 106 at the second corner zone 71, is moved along the advancement direction F1 by the translation device 64. At the same time, the rotating device 52 rotates the gripper device 54 about the rotation axis Z, as indicated by the arrow R1 in Figure 6, i.e., in the illustrated example, in a clockwise direction. In this way, the first corner zone 70 moves away from the cleaning head 45, while the second corner zone 71 is brought towards the cleaning head 45.

The rotating device 52 therefore rotates the frame 106 about a rotation axis Z which is not stationary, but is movable along the advancement direction F1 owing to the translation device 64.

When the second corner zone 71 reaches the cleaning head 45, the frame 106 has been rotated by 90° with respect to the initial position shown in Figure 4. The first section bar 102 and the third section bar 104 are now arranged transversely, in particular perpendicularly, to the advancement direction F1. The second section bar 103 and the fourth section bar 105 are on the other hand arranged parallel to the advancement direction F1.

While the second corner zone 71 is processed by the cleaning head 45, the gripper device 54, previously disengaged from the second corner zone 71, is moved backwards by the translation device 64 and is brought above a third corner zone 72, as shown in Figure 7. The third corner zone 72 is defined between the second section bar 103 and the third section bar 104.

When the cleaning operation on the second corner zone 71 has been concluded, the gripper device 54 is moved forwards along the advancement direction F1 and at the same time is rotated about the rotation axis Z, as indicated by the arrow R2 of Figure 7. The third corner zone 72 is thus brought to the cleaning head 45.

The position shown in Figure 8 is thus reached, in which the first section bar 102 and the second section bar 104 are arranged parallel to the advancement direction F1, while the third section bar 103 and the fourth section bar 105 are arranged transversely, in particular perpendicularly, to the advancement direction F1.

The gripper device 54 now releases the third corner zone 72 and moves backwards along the linear guide 65, until it is positioned above a fourth corner zone 73, defined between the third section bar 104 and the fourth section bar 105.

When the cleaning head 45 has finished cleaning the third corner zone 72, the gripper device 54 grips the frame 106 in the fourth corner zone 73 and displaces the frame forwards along the advancement direction F1.

At the same time, the rotating device 52 rotates the gripper device 54, and with it the frame 106, in the rotating direction R3 indicated in Figure 8, such as to move the third corner zone 72 away from the cleaning head 45 and bring the fourth corner zone 73 to the cleaning head 45, into the final position shown in Figure 9.

The cleaning head 45 can now operate on the fourth and final corner zone 73 of the frame 106, after which the frame 106 can exit from the cleaning station 44 as all the corner zones have been cleaned of the welding residues.

It is stressed that, as shown in Figure 9, when the frame 106 exits from the cleaning station 44 the first section bar 102 and the second section bar 104 are arranged transversely, in particular perpendicularly, to the advancement direction F1, while the second section bar 103 and the fourth section bar 105 are parallel to the advancement direction F1.

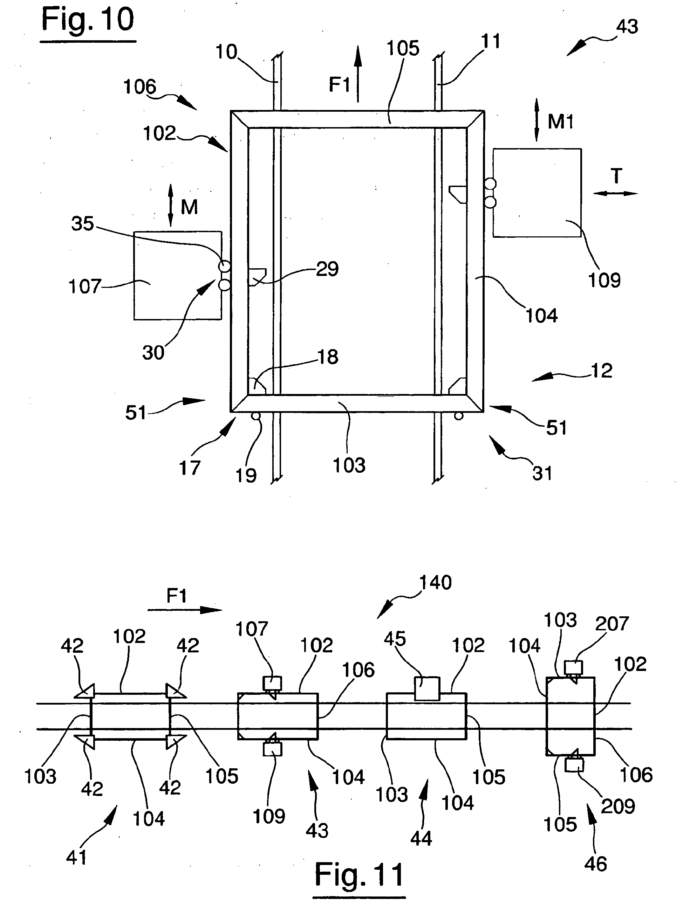

The second section bar 103 and the fourth section bar 105 are now ready to be processed by the working unit 207 and by the further working unit 209 of the second working station 46. Figure 10 schematically shows the structure of the first working station 43, which is entirely similar to the structure of the second working station 46. The following description that is made with reference to the first working station 43 can be considered as also relating to the second working station 46, unless explicit contrary indications are given.

As previously described, the first working station 43 comprises at least a working unit 107 arranged for machining a section bar which is parallel to the advancement direction F1, for example on the first section bar 102. One or more tools can be mounted on the working unit 107, said tools being suitable for performing the desired mechanical operations, for example drilling, milling or fastening accessory components on the frame 106.

A driving system is associated to the working unit 107, the driving system being arranged for moving the working unit 107 forwards and backwards in a movement direction M, which can be substantially parallel to the advancement direction F1. The driving system enables the working unit 107 to be displaced along the first section bar 102 such as to perform the mechanical operations in the desired position.

In the illustrated embodiment, the further working unit 109 is located in the first working station 43, the further working unit 109 being arranged for machining a section bar which is parallel to the first section bar 102, i.e. on the third section bar 104. The further working unit 109 is also movable in a respective movement direction M1, which can be parallel to the advancement direction F1. In this way, the further working unit 109 can be displaced in order to perform the mechanical operations in the desired position on the third section bar 104.

The further working unit 109 can be moved by a movement device in a transverse direction T, arranged transversely of the advancement direction F1. This enables frames of different sizes to be machined, and in particular frames having different distances between the first section bar 102 and the third section bar 104.

The further working unit 109 has an entirely similar structure to the working unit 107. All the following, disclosed with reference to the working unit 107, should be considered to be applicable also to the further working unit 109, unless otherwise indicated.

The first working station 43 comprises rest means for restingly receiving the frame 106 while the frame 106 is being machined. The rest means define a work zone 12 in which the frame 106 can be subjected to the desired mechanical operations. The rest means are suitable for supporting two section bars that are opposite to one another and which do not interact with the working unit 107 and with the further working unit 109, if present, i.e. the second section bar 103 and the fourth section bar 105.

In the illustrated example, the rest means comprise a first elongated element 10 and a second elongated element 11, for example parallel to one another. The rest means define a rest plane arranged at a predefined height.

Upstream of the rest means there are provided inlet conveyor means suitable for transporting the frame 106 to be machined towards the work zone 12, in the advancement direction F1. Discharge conveyor means are also provided, the discharge conveyor means being arranged downstream of the rest means for carrying the already machined frame 106 away from the work zone 12, by moving the frame 106 in the advancement direction F1.

The first working station 43 further comprises the gripping means 51 suitable for engaging with a section bar which is adjacent to the section bar that is being machined, for example with the second section bar 103, such as to keep the frame 106 stationary during the work operation. The gripping means 51 can comprise a first gripping device 17, arranged at a side of the first working station 43 near the working unit 107. The gripping means 51 can further comprise a second gripping device 31, arranged at a side of the first working station 43 close to the further working unit 109. The second gripping device 31 is arranged in a symmetrical position with respect to the first gripping device 17, with reference to a longitudinal axis which is parallel to the advancement direction F1.

As illustrated in Figure 10, the first gripping device 17 comprises a first jaw element 18 and a second jaw element 19, suitable for cooperating with one another to grip the second section bar 103. The first jaw element 18, shaped for example as an approximately triangular plate, is arranged for engaging with an internal angle of the frame 106.

The first jaw element 18 can be provided with a driving device for moving the first jaw element 18 in a vertical direction, such that the first jaw element 18 can engage with, or disengage from, the frame 106.

The second jaw element 19 can be defined by a stem of an actuator device, the stem being movable between a retracted position and an extended position. In the extended position, a lateral surface of the stem can engage with a surface of the second section bar 103, such that the stem acts as a jaw. In the retracted position, the stem does not interact with the frame 106.

The first gripping device 17 can further comprise movement means for moving the first jaw element 18 and the second jaw element 19 with respect to one another, such as move towards one another, or away from one another, the first jaw element 18 and the second jaw element 19. In this way the first jaw element 18 and the second jaw element 19 can alternatively block the second section bar 103 or leave it free.

The working unit 109 further comprises a support device (not illustrated) which is arranged for locally supporting the section bar to be machined, i.e. the first section bar 102, near the zone in which the work operation is to be performed. The support device can comprise a pair of rest rollers on which a portion of the first section bar 102 can rest. The rest rollers are freely rotatable about respective horizontal axes.

A transverse blocking device is also associated to the working unit 109. While the first section bar 102 is being machined, the transverse blocking device enables the portion of the first section bar 102 near which the work operation is to be performed to be blocked in a transverse direction with respect to the advancement direction F1. The transverse blocking device comprises an abutting element 29 cooperating with pusher means 30. In particular, the pusher means 30 are suitable for pushing the first section bar 102 against the abutting element 29.

The abutting element 29 is so positioned as to interact with a lateral surface of the first section bar 102 internally of the frame 106. The pusher means 30 are positioned such as to interact with a further lateral surface of the first section bar 102 externally of the frame 106. In this way, the abutting element 29 and the pusher means 30 engage with opposite lateral surfaces of the first section bar 102 such as to prevent the first section bar 102 from moving transversely of the advancement direction F1 while the first section bar 102 is being machined.

The pusher means 30 can be mounted on the working unit 107, and can comprise a pair of wheels 35 which are freely rotatable about respective vertical axes. The wheels 35 can be made of a plastic material.

The pusher means 30 and the abutting element 29 are movable together with the working unit 107 parallel to the advancement direction F1.

The working unit 107 can further comprise an upper blocking device, arranged for engaging with the portion of the first section bar 102 near which the work operations are to be performed. The upper blocking device prevents upwardly-directed displacement of the first section bar 102 while the first section bar 102 is being machined.

During functioning, the frame 106 is moved in the advancement direction F1 until it arrives in the work zone 12. Here, the second section bar 103 is blocked between the first jaw element 18 and the second jaw element 19 of the first gripping device 17 and the second gripping device 31. Thus, the first gripping device 17 and the second gripping device 31 enable the frame 106 to be kept stationary while the frame 106 is being machined.

The portion of the first section bar 102 which is to be machined is rested on the support device and is blocked superiorly by the upper blocking device. This portion is further blocked between the abutting element 29 and the pusher means 30. This guarantees that the portion of the first section bar 102 which is to be machined is maintained stationary during work operations. Thus, the tools mounted on the working unit 107 can perform the required work operations with precision.

The working unit 107 can be displaced parallel to the advancement direction F1 along the first section bar 102. This is useful for machining distinct portions of the first section bar 102 or for performing certain types of work operation, for example milling. When the working unit 107 moves parallel to the advancement direction F1, the support device, the upper blocking device, the pusher means 30 and the abutting element 29 move with the working unit 107 such as to interact with subsequent portions of the first section bar 102.

When the mechanical operations performed by the working unit 107 on the first section bar 102 are concluded, the upper blocking device disengages from the first section bar 102. The transverse blocking means also release the first section bar 102.

The frame 106 can now be removed from the first working station 43 in order to be brought into the cleaning station 44.

Figure 11 shows a plant 140 according to an alternative embodiment. The parts of the plant 140 that are in common with the plant 40 of Figure 1 are denoted using the same reference numbers and are not newly described in detail.

The plant 140 differs from the plant 40 mainly because in the second working station 46 the second section bar 103, though arranged parallel to the advancement direction F1, is offset, i.e. not aligned, with respect to the position of the first section bar 102 in the preceding stations.

The cleaning station 44 is advantageous because it enables a single rotating device to be used for two functions, i.e. bringing all the corner zones of the frame to interact with the cleaning head 45 and modifying the orientation of the frame 106 such that the section bars initially arranged transversely to the advancement direction are positioned parallel to said direction at the exit from the cleaning station 44.

However, the cleaning station 44 is not indispensable in the plant according the invention. In order to modify the orientation of the frame, it is also possible to use a rotating device interposed between the first working station and the second working station and having the single function of rotating the frame such as to position the second section bar parallel to the advancement direction. In other words, it is not indispensable to provide an intermediate station in which, apart from rotating the frame, additional operations are performed on the frame, such as for example a cleaning operation.

If the rotating device is located in an intermediate station in which the frame, in addition to being rotated, is subject to work operations, in place of the cleaning station 44 it is possible to provide any other intermediate operating station, the intermediate operating station being provided with an operating unit and a rotating device which rotates the frame 106 such as to bring different zones of the frame 106 to interact with the operating unit. The frame 106, after having been subjected to the required operations in the intermediate station, thus exits from the intermediate station with an orientation that is different from the orientation that the frame 106 had on its entry in the intermediate station.

In this way the frame 106 can enter the intermediate station with the first section bar 102, which was machined in the first working station 43, arranged parallel to the advancement direction F1. On exiting the intermediate station, the second section bar 103, which is non-parallel to the first section bar 102, is arranged parallel to the advancement direction F1. In this way the second element 103 is ready to be machined in the second working station 46, by means of a working unit which moves parallel to the advancement direction F1 and which thus does not obstruct the flow of the frames 106.

## Claims

1. A plant, comprising:
- advancement means (50) for advancing an assembled frame (106) of a door or window in an advancement direction (F1);
- a first working station (43) for performing a mechanical operation on a first section bar (102) of the assembled frame (106) while the first section bar (102) is arranged parallel to the advancement direction (F1);
- a rotating device (52) for rotating the assembled frame (106), such as to position a second section bar (103) of the assembled frame (106) along the advancement direction (F1), the second section bar (103) being non-parallel to the first section bar (102);
- a second working station (46) arranged downstream of the first working station (43) for performing a mechanical operation on the second section bar (103), after the second section bar (103) has been positioned parallel to the advancement direction (F1) by the rotating device (52), **characterised in that**
the rotating device (52) is located in an intermediate station (44) interposed between the first working station (43) and the second working station (46), such as to bring different zones of the assembled frame (106) to interact in sequence with an operating head (45) of the intermediate station (44), whereby while an assembled frame is rotated in the intermediate station (44), another assembled frame can be machined in the first working station (43) and a further assembled frame can be machined in the second working station (46).

2. A plant according to claim 1, wherein the rotating device (52) is programmed to perform three 90° rotations in sequence, such that four corner zones (70, 71, 72, 73) of the assembled frame (106) are brought to interact in sequence with the operating unit (45) of the intermediate station (44).

3. A plant according to any preceding claim, wherein the intermediate station is a cleaning station (44) for cleaning corner zones (70, 71, 72, 73) of the assembled frame (106) at which two adjacent section bars (102, 103, 104, 105) are welded to one another.

4. A plant according to claim 3, wherein the cleaning station (44) comprises a cutting device for removing projecting portions of a welding bead.

5. A plant according to any preceding claim, and further comprising a translation device (64) which is drivable in a coordinated way with the rotating device (52) in order to rotate the assembled frame (106) about an axis of rotation (Z) which is movable along a predetermined trajectory.

6. A plant according to any preceding claim, and further comprising a welding station (41) provided upstream of the first working station (43) for welding a plurality of section bars (102, 103, 104, 105) made of a polymer material such as to obtain the assembled frame (106).

7. A plant according to any preceding claim, wherein the rotating device (52) comprises a gripper device (54) arranged for gripping the assembled frame (106) at a corner gripping zone.

8. A plant according to any preceding claim, wherein the first working station (43) and/or the second working station (46) comprise a working unit (107, 207) which is movable along a section bar of the assembled frame for machining said section bar, said section bar being parallel to the advancement direction (F1), the working unit (107, 207) comprising gripping means (51) suitable for engaging with a section bar of the assembled frame (106) arranged transversely of the advancement direction (F1) in order to keep the assembled frame (106) stationary while the assembled frame (106) is being machined.

9. A plant according to any preceding claim, wherein the first working station (43) and/or the second working station (46) comprise two working units (107, 109; 207, 209) which are distanced from one another in a direction that is transverse to the advancement direction (F1), such as to machine simultaneously two parallel section bars of the assembled frame (106).

10. A plant according to any preceding claim, wherein the first working station (43) and/or the second working station (46) are predisposed to perform on the assembled frame (106) operations which are selected from a group comprising: drilling operations, milling operations, operations of fastening an additional component on the assembled frame (106).

11. A method for manufacturing a frame (106) of a door or window, the frame (106) being formed by a plurality of section bars (102, 103, 104, 105), the method comprising the steps of:
- performing a mechanical operation on a first section bar (102) of an assembled frame (106) in a first working station (43) while the first section bar (102) is arranged parallel to an advancement direction (F1);
- rotating the assembled frame (106) such as to position a second section bar (103) of the assembled frame (106) along the advancement direction (F1), the second section bar (103) being non-parallel to the first section bar (102);
- performing a mechanical operation on the second section bar (103) in a second working station (46) arranged downstream of the first working station (43) while the second section bar (106) is arranged parallel to the advancement direction (F1), **characterised in that** the assembled frame (106) is rotated in an intermediate station (44) interposed between the first working station (43) and the second working station (46), such as to bring different zones of the assembled frame (106) to interact in sequence with an operating head (45) of the intermediate station (44), whereby while an assembled frame is rotated in the intermediate station (44), another assembled frame can be machined in the first working station (43) and a further assembled frame can be machined in the second working station (46).

12. A method according to claim 11, wherein the operating head (45) is a cleaning head (45) for cleaning a welded joint in a corner zone (70, 71, 72, 73) of the assembled frame (106).

13. A method according to claim 11 or 12, wherein, during the step of rotating, the assembled frame (106) is rotated about an axis of rotation (Z), for example vertical, with three consecutive 90° rotations.

## Patentansprüche

1. Anlage, umfassend:
- Vorschubmittel (50) zum Vorschieben eines zusammengebauten Rahmens (106) für eine Tür oder ein Fenster in eine Vorschubrichtung (F1);
- eine erste Bearbeitungsstation (43) zum Durchführen einer mechanischen Bearbeitung an einem ersten Profilstab (102) des zusammengebauten Rahmens (106), während der erste Profilstab (102) parallel zur Vorschubrichtung (F1) angeordnet wird;
- eine Drehvorrichtung (52) zum Drehen des zusammengebauten Rahmens (106), um einen zweiten Profilstab (103) des zusammengebauten Rahmens (106) entlang der Vorschubrichtung (F1) zu positionieren, wobei der zweite Profilstab (103) nicht parallel zum ersten Profilstab (102) angeordnet ist;
- eine zweite Bearbeitungsstation (46), die nach der ersten Bearbeitungsstation (43) angeordnet ist, um eine mechanische Bearbeitung am zweiten Profilstab (103) durchzuführen, nachdem der zweite Profilstab (103) von der Drehvorrichtung (52) parallel zur Vorschubrichtung (F1) positioniert wurde, **dadurch gekennzeichnet,**
**dass** sich die Drehvorrichtung (52) an einer Zwischenstation (44) zwischen der ersten Bearbeitungsstation (43) und der zweiten Bearbeitungsstation (46) befindet, um dafür zu sorgen, dass verschiedene Bereiche des zusammengebauten Rahmens (106) nacheinander mit einem Bearbeitungskopf (45) der Zwischenstation (44) interagieren, wobei während der Drehung eines zusammengebauten Rahmens an der Zwischenstation (44) ein weiterer zusammengebauter Rahmen an der ersten Bearbeitungsstation (43) bearbeitet werden kann und ein weiterer zusammengebauter Rahmen an der zweiten Bearbeitungsstation (46) bearbeitet werden kann.

2. Anlage nach Anspruch 1, wobei die Drehvorrichtung (52) programmiert ist, um nacheinander drei 90°-Drehungen auszuführen, sodass vier Eckbereiche (70, 71, 72, 73) des zusammengebauten Rahmens (106) nacheinander dazu gebracht werden, mit der Betriebseinheit (45) der Zwischenstation (44) zu interagieren.

3. Anlage nach einem der vorhergehenden Ansprüche, wobei es sich bei der Zwischenstation um eine Putzstation (44) zum Verputzen der Eckbereiche (70, 71, 72, 73) des zusammengebauten Rahmens (106) handelt, an denen zwei aneinander grenzende Profilstäbe (102, 103, 104, 105) miteinander verschweißt werden.

4. Anlage nach Anspruch 3, wobei die Putzstation (44) eine Schneidvorrichtung zum Entfernen hervorstehender Teile einer Schweißraupe umfasst.

5. Anlage nach einem der vorhergehenden Ansprüche, ferner umfassend eine Verschiebevorrichtung (64), die auf koordinierte Weise mit der Drehvorrichtung (52) verfahren werden kann, um den zusammengebauten Rahmen (106) um eine Rotationsachse (Z) zu drehen, die entlang einer vorgegebenen Bahn bewegbar ist.

6. Anlage nach einem der vorhergehenden Ansprüche, umfassend eine Schweißstation (41), die vor der ersten Bearbeitungsstation (43) zur Verfügung gestellt wird, zum Verschweißen einer Vielzahl von Profilstäben (102, 103, 104, 105), bestehend aus einem Polymermaterial, um den zusammengebauten Rahmen (106) zu erhalten.

7. Anlage nach einem der vorhergehenden Ansprüche, wobei die Drehvorrichtung (52) eine Greifvorrichtung (54) umfasst, die angeordnet ist, um den zusammengebauten Rahmen (106) an einem Eckgreifbereich zu greifen.

8. Anlage nach einem der vorhergehenden Ansprüche, wobei die erste Bearbeitungsstation (43) und/oder die zweite Bearbeitungsstation (46) eine Bearbeitungseinheit (107, 207) umfassen, die entlang eines Profilstabs des zusammengebauten Rahmens verfahren werden kann, um diesen Profilstab zu bearbeiten, wobei der Profilstab parallel zur Vorschubrichtung (F1) angeordnet ist und die Bearbeitungseinheit (107, 207) Greifmittel umfasst (51), die geeignet sind, um mit einem Profilstab des zusammengebauten Rahmens (106) in Eingriff zu gelangen, der quer zur Vorschubrichtung (F1) angeordnet ist, um den zusammengebauten Rahmen (106) festzuspannen, während der zusammengebaute Rahmen (106) bearbeitet wird.

9. Anlage nach einem der vorhergehenden Ansprüche, wobei die erste Bearbeitungsstation (43) und/oder die zweite Bearbeitungsstation (46) zwei Bearbeitungseinheiten (107, 109; 207, 209) umfassen, die zueinander in eine Richtung beabstandet sind, die quer zur Vorschubrichtung (F1) verläuft, sodass simultan zwei parallel angeordnete Profilstäbe des zusammengebauten Rahmens (106) bearbeitet werden.

10. Anlage nach einem der vorhergehenden Ansprüche, wobei die erste Bearbeitungsstation (43) und/oder die zweite Bearbeitungsstation (46) so angeordnet sind, dass sie am zusammengebauten Rahmen (106) Vorgänge ausführen, die aus einer Gruppe ausgewählt sind, umfassend: Bohren, Fräsen, Vorgänge zum Befestigen eines zusätzlichen Elements am zusammengebauten Rahmen (106).

11. Verfahren zur Herstellung eines Rahmens (106) für Türen oder Fenster, wobei der Rahmen (106) aus einer Vielzahl von Profilstäben (102, 103, 104, 105) gebildet ist und das Verfahren folgende Schritte umfasst:
- Ausführen eines mechanischen Vorgangs an einem ersten Profilstab (102) des zusammengebauten Rahmens (106) an einer ersten Bearbeitungsstation (43), während der erste Profilstab (102) parallel zu einer Vorschubrichtung (F1) angeordnet wird;
- Drehen des zusammengebauten Rahmens (106), um einen zweiten Profilstab (103) des zusammengebauten Rahmens (106) entlang der Vorschubrichtung (F1) zu positionieren, wobei der zweite Profilstab (103) nicht parallel zum ersten Profilstab (102) angeordnet ist;
- Ausführen eines mechanischen Vorgangs am zweiten Profilstab (103) an einer zweiten Bearbeitungsstation (46), die nach der ersten Bearbeitungsstation (43) angeordnet ist, während der zweite Profilstab (106) parallel zur Vorschubrichtung (F1) angeordnet ist;
- dadurch gekennezeichnet, dass der zusammengebaute Rahmen (106) an einer Zwischenstation (44) zwischen der ersten Bearbeitungsstation (43) und der zweiten Bearbeitungsstation (46) gedreht wird, um dafür zu sorgen, dass verschiedene Bereiche des zusammengebauten Rahmens (106) nacheinander mit einem Betriebskopf (45) der Zwischenstation (44) interagieren, wobei während der Drehung eines zusammengebauten Rahmens an der Zwischenstation (44) ein weiterer zusammengebauter Rahmen in der ersten Bearbeitungsstation (43) bearbeitet werden kann und ein weiterer zusammengebauter Rahmen in der zweiten Bearbeitungsstation (46) bearbeitet werden kann.

12. Verfahren nach Anspruch 11, wobei es sich beim Betriebskopf (45) um einen Putzkopf (45) zum Verputzen einer Schweißverbindung in einem Eckbereich (70, 71, 72, 73) des zusammengebauten Rahmens (106) handelt.

13. Verfahren nach Anspruch 11 oder 12, wobei der zusammengebaute Rahmen (106) während des Schritts des Drehens um eine Rotationsachse (Z), beispielsweise vertikal, mit drei aufeinanderfolgenden 90°-Drehungen gedreht wird.

## Revendications

1. Installation, comprenant:
- des moyens de progression (50) permettant de faire avancer un cadre assemblé (106) d'une porte ou d'une fenêtre dans un sens de progression (F1);
- un premier poste d'usinage (43) permettant d'effectuer une opération mécanique sur un premier profilé (102) du cadre assemblé (106) pendant que le premier profilé (102) est disposé de façon parallèle par rapport au sens de progression (F1);
- un dispositif rotatif (52) permettant de faire tourner le cadre assemblé (106) de sorte à positionner un second profilé (103) du cadre assemblé (106) le long du sens de progression (F1), le second profilé (103) étant non-parallèle par rapport au premier profilé (102);
- un second poste d'usinage (46) disposé en aval du premier poste d'usinage (43) permettant d'effectuer une opération mécanique sur le second profilé (103) après que le second profilé (103) ait été positionné de façon parallèle par rapport au sens de progression (F1) par le dispositif rotatif (52), **caractérisée en ce que**
le dispositif rotatif (52) est situé dans un poste intermédiaire (44) interposé entre le premier poste d'usinage (43) et le second poste d'usinage (46) de sorte à amener différentes parties du cadre assemblé (106) à interagir en séquence avec une unité opérationnelle (45) du poste intermédiaire (44), par laquelle pendant qu'un cadre assemblé pivote dans le poste intermédiaire (44), un autre cadre assemblé peut être usiné dans le premier poste d'usinage (43) et un autre cadre assemblé peut être usiné dans le second poste d'usinage (46).

2. Installation selon la revendication 1, dans laquelle le dispositif rotatif (52) est programmé pour effectuer une série de trois rotations de 90 de sorte que quatre zones d'angle (70, 71, 72, 73) du cadre assemblé (106) sont amenées à interagir en série avec l'unité opérationnelle (45) du poste intermédiaire (44).

3. Installation selon l'une quelconque des revendications précédentes, dans laquelle le poste intermédiaire est un poste de nettoyage (44) permettant de nettoyer les zones d'angle (70, 71, 72, 73) du cadre assemblé (106) auquel deux profilés adjacents (102, 103, 104, 105) sont soudés l'un à l'autre.

4. Installation selon la revendication 3, dans laquelle le poste de nettoyage (44) comprend un dispositif de découpe permettant de retirer les parties saillantes d'un cordon de soudure.

5. Installation selon l'une quelconque des revendications précédentes, et comprenant de plus un dispositif de translation (64) pouvant être entraîné d'une façon coordonnée avec le dispositif rotatif (52) afin de faire pivoter le cadre assemblé (106) autour d'u axe de rotation (Z) étant mobile le long d'une trajectoire prédéterminée.

6. Installation selon l'une quelconque des revendications précédentes, et comprenant de plus un poste de soudage (41) prévu en amont du premier poste d'usinage (43) servant à souder une pluralité de profilés (102, 103, 104, 105) en matière polymère de sorte à obtenir le cadre assemblé (106).

7. Installation selon l'une quelconque des revendications précédentes, dans laquelle le dispositif rotatif (52) comprend un dispositif de préhension (54) positionné pour saisir le cadre assemblé (106) au niveau d'une zone d'angle de préhension.

8. Installation selon l'une quelconque des revendications précédentes, dans laquelle le premier poste d'usinage (43) et/ou le second poste d'usinage (46) comprend une unité d'usinage (107, 207) étant mobile le long d'un profilé du cadre assemblé afin d'usiner ledit profilé, ledit profilé étant parallèle au sens de progression (F1), l'unité d'usinage (107, 207) comprenant des moyens de préhension (51) pouvant se mettre en prise avec un profilé du cadre assemblé (106) disposé transversalement par rapport au sens de progression (F1) afin de maintenir immobile le cadre assemblé (106) pendant que le cadre assemblé (106) est en train d'être usiné.

9. Installation selon l'une quelconque des revendications précédentes, dans laquelle le premier poste d'usinage (43) et/ou le second poste d'usinage (46) comprend deux unités d'usinage (107, 109 ; 207, 209) étant éloignées l'une de l'autre dans une direction étant transversale par rapport au sens de progression (F1) de sorte à usiner simultanément deux profilés parallèles du cadre assemblé (106).

10. Installation selon l'une quelconque des revendications précédentes, dans laquelle le premier poste d'usinage (43) et/ou le second poste d'usinage (46) sont prédisposés pour effectuer sur le cadre assemblé (106) les opérations sélectionnées dans un groupe comprenant : opérations de perçage, opérations de fraisage, opérations de fixation d'un composant supplémentaire sur le cadre assemblé (106).

11. Procédé de fabrication d'un cadre (106) de porte ou de fenêtre, le cadre (106) se composant d'une pluralité de profilés (102, 103, 104, 105), le procédé comprenant les étapes suivantes:
- effectuer une opération mécanique sur un premier profilé (102) du cadre assemblé (106) dans un premier poste d'usinage (43) pendant que le premier profilé (102) est disposé de façon parallèle par rapport au sens de progression (F1);
- faire tourner le cadre assemblé (106) de sorte à positionner un second profilé (103) du cadre assemblé (106) le long du sens de progression (F1), le second profilé (103) étant non-parallèle par rapport au premier profilé (102);
- effectuer une opération mécanique sur le second profilé (103) dans un second poste d'usinage (46) disposé en aval du premier poste d'usinage (43) pendant que le second profilé (106) est disposé de façon parallèle au sens de progression (F1);
**caractérisé en ce que** le cadre assemblé (106) pivote dans un poste intermédiaire (44) interposé entre le premier poste d'usinage (43) et le second poste d'usinage (46) de sorte à amener les différentes parties du cadre assemblé (106) à interagir en série avec une unité opérationnelle (45) du poste intermédiaire (44), par laquelle pendant qu'un cadre assemblé pivote dans le poste intermédiaire (44), un autre cadre assemblé peut être usiné dans le premier poste d'usinage (43) et un autre cadre assemblé peut être usiné dans le second poste d'usinage (46).

12. Procédé selon la revendication 11, dans lequel l'unité opérationnelle (45) est une tête de nettoyage (45) permettant de nettoyer un raccord soudé dans une zone d'angle (70, 71, 72, 73) du cadre assemblé (106).

13. Procédé selon les revendications 11 ou 12, dans lequel, lors de la phase de rotation, le cadre assemblé (106) pivote autour d'un axe de rotation (Z), par exemple vertical, avec trois rotations consécutives de 90 ° .
